# EUROPÄISCHE PATENTSCHRIFT

(11) **EP 2 417 181 B1**
(45) Veröffentlichungstag und Bekanntmachung des Hinweises auf die Patenterteilung: **20.05.2015**
(21) Anmeldenummer: 10711844.0
(22) Anmeldetag: 27.03.2010
(51) Int. Cl.: C08G 63/183, C08G 63/66, C08G 18/42

(54) **Polyesterpolyole aus Terephthalsäure und Oligoalkylenoxiden**
Polyester polyols from terephthalic acid and oligoalkylenoxides
Polyesterpolyoles issus d'acide térephtalique et d'oxydes oligoalkyles

(30) Priorität: 09.04.2009 EP 09005229
(43) Veröffentlichungstag der Anmeldung: 15.02.2012
(73) Patentinhaber: Bayer Intellectual Property GmbH, 40789 Monheim (DE)
(72) Erfinder: NEFZGER, Hartmut, 50259 Pulheim (DE); BAUER, Erika, 41363 Jüchen (DE); KÜNZEL, Uwe, 51377 Leverkusen (DE); SCHLOSSMACHER, Jürgen, 50126 Bergheim (DE); BRASSAT, Lutz, 51375 Leverkusen (DE)
(74) Vertreter: BIP Patents
(86) Internationale Anmeldenummer: PCT/EP2010/001950
(87) Internationale Veröffentlichungsnummer: WO 2010/115532

(56) Entgegenhaltungen:
- WO-A-99/54380
- GB-A- 2 234 253
- US-A- 4 039 487
- US-A- 4 469 824

## Beschreibung

Die vorliegende Erfindung betrifft Polyesterpolyole aus Terephthalsäure und Oligoalkylenoxiden, Verfahren zu deren Herstellung, sowie deren Verwendung zur Herstellung von PUR-/PIR-Hartschaumstoffen.

PUR-/PIR-Hartschaumstoffe werden in der heutigen Zeit vorwiegend auf Basis von Polyesterpolyolen hergestellt, da diese die Flammwidrigkeit der PUR-/PIR-Hartschaumstoffe und die Wärmeleitfähigkeit positiv beeinflussen. Bei der Herstellung der Polyesterpolyole finden als Rohstoffe vor allem Bernsteinsäure, Glutarsäure, Adipinsäure, Phthalsäure/-anhydrid, Terephthalsäure und Isophthalsäure Verwendung. Neben den Polyesterpolyolen werden gelegentlich noch Polyetherpolyole zugesetzt, um das Löslichkeitsverhalten von Pentanen gegenüber den Polyesterpolyolen zu verbessern oder die Sprödigkeit der isocyanurathaltigen PUR-/PIR-Hartschaumstoffe zu reduzieren.

US 4,039,487 beschreibt in diesem Zusammenhang Polyesterpolyole, die aus Polyethylenglykolen mit Äquivalentgewichten von 75 bis 225 g/mol und aromatischen Polycarbonsäuren erhalten werden können. Die anteilige Mitverwendung aliphatischer Polycarbonsäuren wird nicht in Betracht gezogen.

EP-A 1 834 974 ist in gleicher Weise auf aromatische Polycarbonsäuren beschränkt, sowie US 5,003,027 darüber hinaus auf die Verarbeitung der Polyesterpolyole in einem RIM-Prozess.

WO-A 99/54380 offenabrt zur Herstellung von Polyesterpolyolen zwar auch die Verwendung von aliphatischen Dicarbonsäuren, nutzt jedoch immer Polyethylenglykolterephthalate (PET) als Quelle der aromatischen Dicarbonsäure. Generell nachteilig an einem derartigen Verfahren, das auf Recylcling-Material beruht, ist jedoch dessen potentielle Verunreinigung durch Fremdmaterialien, die z.T. aufwendig entfernt werden müssen.

US 4,469,824 beruht ebenfalls auf Recycling-PET, wobei als eine der weiteren Reaktionskomponenten Adipinsäure vorgeschlagen wird.

Die Verwendung von aromatischen Säuren, insbesondere die Verwendung von Terephthalsäure bei der Herstellung von Polyesterpolyolen kann allerdings dazu führen, dass diese bei Raumtemperatur in fester Form vorliegen und damit deren Verarbeitung in technischen Prozessen erschwert wird.

Im Stand der Technik sind konkrete Handlungsanweisungen jedoch nicht offenbart, nach denen es möglich wäre, ein Polyesterpolyol, welches alle im Bereich PUR-/PIR-Hartschaumstoffe wichtigen Verarbeitungsparamter zu erfüllen, herzustellen ist.

Weiterhin zeigen viele herkömmliche PUR-/PIR-Hartschaumstoffe auf Basis von Polyesterpolyolen keine ausreichende Flammwidrigkeit, da sie in der Regel nur die Brandschutzklasse B3 nach DIN 4102-1 erfüllen.

Es war daher eine Aufgabe der vorliegenden Erfindung Polyesterpolyole zur Verfügung zu stellen, die bei ihrer Verwendung in PUR-/PIR-Hartschaumstoffen zu verbesserter Flammwidrigkeit führen, insbesondere zu PUR-/PIR-Hartschaumstoffen führen, die nach DIN 4102-1 die Brandschutzklasse B2 und/oder den SBI-Test (DIN EN 13823) erfüllen.

Eine weitere Aufgabe der vorliegenden Erfindung war es, Polyesterpolyole zur Verfügung zu stellen, die sich in technischen Prozessen bei der Herstellung von PUR-/PIR-Hartschaumstoffen leicht verarbeiten lassen und gleichzeitig zu verbesserter Flammwidrigkeit führen.

Die erfindungsgemäße Aufgabe wird gelöst durch das Zurverfügungstellen eines Polyesterpolyol, das hergestellt wird aus einer Mischung umfassend
(A) Terephthalsäure, ggf. in Form eines C₁-C₄ Alkylesters
(B) Oligoethylenglykol der Formel H-(OCH₂CH₂)ₙ-OH mit einer zahlenmittleren Anzahl Oxyethylengruppen n im Bereich zwischen 3.0 und 9.0, und
(C) wenigstens eine aliphatische Dicarbonsäure ausgewählt aus der Gruppe bestehend aus Bernsteinsäure, Glutarsäure, Adipinsäure, Sebacinsäure, Korksäure, Azelainsäure, Decandicarbonsäure, Dodecandicarbonsäure und omega-Hydroxycapronsäure,
dadurch gekennzeichnet, dass das hergestellte Polyesterpolyol eine Konzentration an Ethergruppen im Bereich zwischen 9.0 mol/kg Polyesterpolyol und 16 mol/kg Polyesterpolyol aufweist.

Ein C₁-C₄ Alkylester der Terephthalsäure ist vorzugsweise ein Ester ausgewählt aus der Gruppe bestehend aus Terephthalsäuredimethylester, Terephthalsäurediethylester, Terephthalsäure-di-n-butylester und Terephthalsäurediisobutylester.

Im Sinne der vorliegenden Erfindung weist eine Verbindung der allgemeinen Formel H-(OCH₂CH₂)ₙ-OH mit
n = 1 eine Oxyethylengruppe und keine Ethergruppe auf;
n = 2 zwei Oxyethylengruppe und eine Ethergruppe auf;
n = 3 drei Oxyethylengruppen und zwei Ethergruppen auf;
n = 4 vier Oxyethylengruppen und drei Ethergruppen auf;
n = 5 fünf Oxyethylengruppen und vier Ethergruppen auf;
n = 6 sechs Oxyethylengruppen und fünf Ethergruppen auf;
n = 7 sieben Oxyethylengruppen und sechs Ethergruppen auf;
n = 8 acht Oxyethylengruppen und sieben Ethergruppen auf und
n = 9 neun Oxyethylengruppen und acht Ethergruppen auf.

Die Komponente (B) ist vorzugsweise ein Gemisch aus verschiedenen oligomeren Ethylenglykolen, wobei der Wert n die durchschnittliche Anzahl von Oxyethylengruppen in der Komponente (B) angibt. Besonders bevorzugt enthält die Komponente (B) an Oligomerem mit n = 2 weniger als 8 Gew.-%, ganz besonders bevorzugt weniger als 3 Gew.-%. Damit können sich für den Wert n auch nicht ganze Werte wie beispielsweise 3.1, 3.2 oder 3.24 ergeben.

Vorzugsweise weisen Oligoethylenglykole (B) zahlenmittlere Molekulargewichte im Bereich von 145 bis 450 g/mol, besonders bevorzugt im Bereich von 150 bis 250 g/mol auf.

Bevorzugt weist das hergestellte Polyesterpolyol eine Menge an Ethergruppen im Bereich zwischen 9,1 mol/kg Polyesterpolyol und 13 mol/kg Polyesterpolyol auf.

Die Mischung umfasst wenigstens eine aliphatischen Dicarbonsäure (C) ausgewählt aus der Gruppe bestehend aus Bernsteinsäure, Glutarsäure, Adipinsäure, Sebacinsäure, Korksäure, Azelainsäure, Decandicarbonsäure, Dodecandicarbonsäure und omega-Hydroxycapronsäure. Besonders bevorzugt umfasst die Mischung wenigstens eine aliphatische Dicarbonsäure (C) ausgewählt aus der Gruppe bestehend aus Bernsteinsäure, Glutarsäure und Adipinsäure.

Vorzugsweise liegt die Komponente (A) in einer Menge von 10 bis 40 Gew.-%, besonders bevorzugt in einer Menge von 15 bis 35 Gew.-%, bezogen auf die Gesamtmenge der Mischung zur Herstellung des erfindungsgemäßen Polyesterpolyols vor.

Vorzugsweise liegt die Komponente (B) in einer Menge von 60 bis 90 Gew.-%, besonders bevorzugt in einer Menge von 55 bis 85 Gew.-%, bezogen auf die Gesamtmenge der Mischung zur Herstellung des erfindungsgemäßen Polyesterpolyols vor.

Vorzugsweise liegt die Komponente (C) in einer Menge von 0 bis 20 Gew.-%, besonders bevorzugt 2 bis 20 Gew.-%, höchst bevorzugt in einer Menge von 3 bis 15 Gew.-%, ganz besonders bevorzugt in einer Menge von 5 bis 14 Gew.-%, bezogen auf die Gesamtmenge der Mischung zur Herstellung des erfindungsgemäßen Polyesterpolyols vor.

Überraschenderweise wurde gefunden, dass die Mitverwendung der Komponente (C) bei ansonsten gleicher Rezeptur und unveränderter Hydroxylzahl des Polyesterpolyols vorteilhafterweise eine verminderte Viskosität des Polyesterpolyols bewirkt.

Vorzugsweise weist das Polyesterpolyol eine Hydroxylzahl im Bereich zwischen 100 mg KOH/g und 400 mg KOH/g, besonders bevorzugt im Bereich zwischen 110 mg KOH/g und 220 mg KOH/g, ganz besonders bevorzugt im Bereich zwischen 150 mg KOH/g und 200 mg KOH/g, auf.

Die OH-Zahl wird bestimmt, indem in einer Probe des Polyesterpolyols die Hydroxylendgruppen zunächst mit einem definierten Überschuss eines Anhydrids, z.B. Essigsäureanhydrid zur Umsetzung gebracht werden, das überschüssige Anhydrid hydrolysiert und der Gehalt an freien Carboxylgruppen durch direkte Titration mit einer starken Base, z.B. Natriumhydroxid, ermittelt wird. Die Differenz von in Form des Anhydrids eingebrachten Carboxylgruppen und den experimentell gefundenen Carboxylgruppen ist ein Maß für die Anzahl an Hydroxylgruppen der Probe. Sofern dieser Wert um die Anzahl der in der ursprünglichen Probe infolge nicht ganz vollständiger Veresterung enthaltenen Carboxylgruppen korrigiert wird, d.h. um die Säurezahl, wird die OH-Zahl erhalten. Die meist mit Natriumhydroxid durchgeführten Titrationen werden dabei in die äquivalente Menge Kaliumhydroxid umgerechnet, so dass Säure- und Hydroxylzahlen die Dimension g KOH/kg aufweisen. Zwischen Hydroxylzahl (OH#) und zahlenmittlerem Molekulargewicht (M) besteht dabei folgender rechnerischer Zusammenhang: M = (56100 * F) / OH#. F bedeutet hierbei die zahlenmittlere Funktionalität und kann aus der Rezeptur in guter Nährung abgeleitet werden. Die Methode zur Bestimmung der OH-Zahl ist beispielsweise beschrieben in Houben Weyl, Methoden der Organischen Chemie, Band XIV/2 Makromolekulare Stoffe, S.17, Georg Thieme Verlag; Stuttgart 1963.

Die Molmassen der erfindungsgemäßen Polyesterpolyole liegen vorzugsweise im Bereich von 280 bis 1120 Da, besonders bevorzugt von 510 bis 1020 Da, ganz besonders bevorzugt von 560 bis 750 Da.

Vorzugsweise weist das erfindungsgemäße Polyesterpolyol eine Säurezahl im Bereich von 0,1 KOH/g bis 4 mg KOH/g, besonders bevorzugt im Bereich von 0,2 KOH/g bis 2,8 KOH/g, auf.

Die Methode zur Bestimmung der Säurezahl ist beispielsweise beschrieben in Houben Weyl, Methoden der Organischen Chemie, Band XIV/2 Makromolekulare Stoffe, S.17 f., Georg Thieme Verlag; Stuttgart 1963.

Vorzugsweise weist das erfindungsgemäße Polyesterpolyol eine Viskosität gemessen nach DIN 53019 im Bereich zwischen 800 mPas und 4500 mPas, besonders bevorzugt im Bereich zwischen 1000 mPas und 3000 mPas, bei 25 °C auf.

Vorzugsweise weist das Oligoethylenglykol (B) eine zahlenmittlere Anzahl Oxyethylengruppen n im Bereich zwischen 3.1 und 9, besonders bevorzugt im Bereich zwischen 3.5 und 8, auf.

Vorzugsweise weist das Polyesterpolyol das Polyesterpolyol einen Schmelzpunkt im Bereich zwischen -40 °C und 25 °C, besonders bevorzugt im Bereich zwischen -20 und 23 °C, auf.

Bevorzugt wird das erfindungsgemäße Polyesterpolyol hergestellt aus einer Mischung umfassend Terephthalsäure (A) und Oligoethylenglykol (B) der Formel H-(OCH₂CH₂)ₙ-OH mit einer zahlenmittleren Anzahl Oxyethylengruppen n im Bereich von 3.0 bis 9.0, und wenigstens einer aliphatischen Dicarbonsäure (C) ausgewählt aus der Gruppe bestehend aus Bernsteinsäure, Glutarsäure und Adipinsäure.

Ein weiterer Gegenstand der vorliegenden Erfindung ist ein Verfahren zur Herstellung der erfindungsgemäßen Polyesterpolyole, wobei die Komponenten (A) und (B) bevorzugt in Gegenwart eines Katalysators ausgewählt aus der Gruppe bestehend aus Zinn(II)-Salzen und Titantetraalkoxylaten bei einer Temperatur im Bereich zwischen 160 °C und 240 °C und einem Druck im Bereich zwischen 1 und 1013 mbar für eine Dauer im Bereich zwischen 7 und 100 Stunden umgesetzt werden.

Zur Herstellung der erfindungsgemäßen Polyesterpolyole können alle dem Fachmann bekannten Katalysatoren verwendet werden. Bevorzugt werden Zinn-(II)-chlorid und Titan-tetraalkoxylate verwendet. Besonders bevorzugt ist die Verwendung von Zinndichloriddihydrat in Anteilen von 20 bis 200 ppm, ganz besonders bevorzugt 45 bis 80 ppm, bezogen auf alle Einsatzkomponenten.

Die Umsetzung der Komponenten zur Herstellung des erfindungsgemäßen Polyesterpolyols erfolgt vorzugsweise in Substanz.

Ein weiterer Gegenstand der vorliegenden Erfindung ist ein Verfahren zur Herstellung eines PUR-, bzw. PUR/PIR-Schaumstoffes umfassend die Schritte
a) Umsatz wenigstens eines erfindungsgemäßen Polyesterpolyols mit
b) wenigstens einer polyisocyanathaltigen Komponente,
c) wenigstens einem Treibmittel,
d) wenigstens einem oder mehreren Katalysatoren,
e) gegebenenfalls wenigstens einem Flammschutzmittel und/oder weiteren Hilfs- und Zusatzstoffen
f) gegebenenfalls wenigstens einer Verbindung mit mindestens zwei gegenüber Isocyanat reaktiven Gruppen.

Als polyisocyanathaltige Komponente kommen die üblichen aliphatischen, cycloaliphatischen und insbesondere aromatischen Di- und/oder Polyisocyanate in Frage. Bevorzugt verwendet werden Toluylendiisocyanat (TDI), Diphenylmethandiisocyanat (MDI) und insbesondere Gemische aus Diphenylmethandiisocyanat und Polyphenylenpolymethylenpolyisocyanaten (Polymer-MDI). Die Isocyanate können auch modifiziert sein, beispielsweise durch Einbau von Uretdion-, Carbamat-, Isocyanurat-, Carbodiimid-, Allophanat- und insbesondere Urethangruppen. Zur Herstellung von Polyurethan-Hartschaumstoffen wird insbesondere Polymer-MDI eingesetzt. Die Isocyanurat-Bildung erfolgt im Stand der Technik praktisch ausschließlich während der Verschäumungsreaktion und führt zu flammwidrigen PUR/PIR-Schaumstoffen, welche bevorzugt im technischen Hartschaum, beispielsweise im Bauwesen als Dämmplatte, Sandwichelemente und LKW Aufbauten eingesetzt werden.

Als Verbindungen mit mindestens zwei gegenüber Isocyanat reaktiven Gruppen, das heißt mit mindestens zwei mit Isocyanatgruppen reaktiven Wasserstoffatomen können allgemein Verbindungen eingesetzt werden, die nachfolgend allgemein beschrieben werden.

Als Verbindungen mit mindestens zwei gegenüber Isocyanat reaktiven Gruppen kommen insbesondere solche in Frage, die zwei oder mehrere reaktive Gruppen, ausgewählt aus OH-Gruppen, SH-Gruppen, NH-Gruppen, NH₂-Gruppen und CH-aciden Gruppen, wie z.B. *β*-Diketo-Gruppen, im Molekül tragen. Zur Herstellung der nach dem erfindungsgemässen Verfahren bevorzugt hergestellten Polyurethanhartschaumstoffe kommen insbesondere Verbindungen mit 2 bis 8 OH-Gruppen zum Einsatz. Vorzugsweise eingesetzt werden Polyetherpolyole und/oder Polyesterpolyole. Die Hydroxylzahl der verwendeten Polyetherpolyole und/oder Polyesterpolyole beträgt bei der Herstellung von Polyurethanhartschaumstoffen vorzugsweise 25 bis 850 mg KOH/g, besonders bevorzugt 25 bis 450 mg KOH/g, die Molekulargewichte sind vorzugsweise größer als 400 g/mol. Bevorzugt enthält die Komponente (f) Polyetherpolyole, die nach bekannten Verfahren, beispielsweise durch anionische Polymerisation mit Alkalihydroxiden, wie Natrium- oder Kaliumhydroxid oder Alkalialkoholaten, wie Natriummethylat, Natrium- oder Kaliumethylat oder Kaliumisopropylat als Katalysatoren und unter Zusatz mindestens eines Startermoleküls das 2 bis 8, vorzugsweise 2 bis 6 reaktive Wasserstoffatome gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden. Weiterhin kann die Herstellung der Polyetherpolyole mittels Doppelmetallcyanidkatalyse erfolgen, wobei hier auch eine kontinuierliche Fahrweise möglich ist.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht Glycerin, Trimethylolpropan, Pentaerythrit, Sacharose, Sorbit, Methylamin, Ethylamin, Isopropylamin, Butylamin, Benzylamin, Anilin, Toluidin, Toluoldiamin, Naphtylamin, Ethylendiamin, Diethylentriamin, 4,4'-Methylendianilin, 1,3,-Propandiamin, 1,6-Hexandiamin, Ethanolamin, Diethanolamin, Triethanolamin sowie andere zwei oder mehrwertige Alkohole, die ihrerseits auch Oligoetherpolyole sein können oder ein- oder mehrwertige Amine.

Ferner kann die Komponente (f) optional Polyesterpolyole, Kettenverlängerungs- und/oder Vernetzungsmitteln enthalten. Als Kettenverlängerungs- und/oder Vernetzungsmittel kommen insbesondere zwei- oder dreifunktionelle Amine und Alkohole, insbesondere Diole und/oder Triole mit Molekulargewichten kleiner als 400 g/mol, vorzugsweise von 60 bis 300, zum Einsatz. Bevorzugt setzt man als Verbindung (f) Polyetherpolyole und/oder Polyesterpolyole mit einer Hydroxylzahl grösser 160, besonders bevorzugt grösser 200 mg KOH/g und besonders bevorzugt einer Funktionalität zwischen 2,9 und 8 ein. Besonders bevorzugt setzt man als gegenüber Isocyanaten reaktive Verbindungen (f) Polyetherpolyole ein, die ein Äquivalentgewicht, d.h. Molekulargewicht dividiert durch die Funktionalität, kleiner 400 g/mol, bevorzugt kleiner 200 g/mol aufweisen. Die Verbindung (f) liegt im Allgemeinen in flüssiger Form vor.

Als Treibmittelkomponente (c) werden bevorzugt Kohlenwasserstoffe eingesetzt. Diese können im Gemisch mit Wasser und/oder weiteren physikalische Treibmittel eingesetzt werden. Darunter versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe, und andere Verbindungen, wie zum Beispiel perfluorierte Alkane, wie Perfluorhexan, Fluorchlorkohlenwasserstoffe, sowie Ether, Ester, Ketone und/oder Acetale.

Die Treibmittelkomponente (c) setzt man bevorzugt in einer Menge von 2 bis 45 Gew.-%, bevorzugt 4 bis 30 Gew.-%, besonders bevorzugt 5 bis 20 Gew.-%, bezogen auf das Gesamtgewicht der Komponenten (b) bis (f) ein. In einer bevorzugten Ausführungsform enthält das Treibmittelgemisch (c) Kohlenwasserstoffe, insbesondere n-Pentan und/oder Cyclopentan und Wasser. Besonders bevorzugte Kohlenwasserstoffe sind n-Pentan, Cyclopentan, iso-Pentan und/oder Mischungen der Isomeren. Insbesondere werden Cyclopentan und/oder n-Pentan als Treibmittel (c) verwendet.

Als Katalysatoren (d) für die Herstellung der erfindungsgemäßen Polyurethan- bzw. Polyisocyanurat-Schaumstoffe werden die üblichen und bekannten Polyurethan- bzw. Polyisocyanuratbildungskatalysatoren eingesetzt, beispielsweise organische Zinnverbindungen, wie Zinndiacetat, Zinndioctoat, Dibutylzinndilaurat und/oder stark basische Amine wie 2,2,2-Diazabicyclooctan, Triethylamin oder vorzugsweise Triethylendiamin, N,N-Dimethylcyclohexylamin oder Bis(N,N-Dimethylaminoethyl)ether, sowie zur Katalyse der PIR-Reaktion Kaliumacetat, Kaliumoctoat und aliphatische quaternäre Ammoniumsalze.

Die Katalysatoren werden vorzugsweise in einer Menge von 0,05 bis 3 Gew.-%, vorzugsweise 0,06 bis 2 Gew.-%, bezogen auf das Gesamtgewicht aller Komponenten eingesetzt.

Die Umsetzung der vorstehend genannten Komponenten erfolgt gegebenenfalls in Anwesenheit von (e) Zusatzstoffen, wie z.B. Flammschutzmittel, Füllstoffen, Zellreglern, Schaumstabilisatoren, oberflächenaktiven Verbindungen und/oder Stabilisatoren gegen oxidativen, thermischen oder mikrobiellen Abbau oder Alterung, bevorzugt Flammschutzmittel und/oder Schaumstabilisatoren. Als Schaumstabilisatoren werden Stoffe bezeichnet, welche die Ausbildung einer regelmäßigen Zellstruktur bei der Schaumbildung fördern. Beispielsweise sind genannt: Siliconhaltige Schaumstabilisatoren, wie Siloxan-Oxalkylen-Mischpolymerisate und andere Organopolysiloxane, ferner Alkoxylierungsprodukte von Fettalkoholen, Oxoalkoholen, Fettaminen, Alkylphenolen, Dialkylphenolen, Alkylkresolen, Alkylresorcin, Naphthol, Alkylnaphthol, Naphtylamin, Anilin, Alkylanilin, Toluidin, Bisphenol A, alkyliertem Bisphenol A, Polyvinylalkohol, sowie weiterhin Alkoxylierungsprodukte von Kondensationsprodukten aus Formaldehyd und Alkylphenolen, Formaldehyd und Dialkylphenolen, Formaldehyd und Alkylkresolen, Formaldehyd und Alkylresorcin, Formaldehyd und Anilin, Formaldehyd und Toluidin, Formaldehyd und Naphthol, Formaldehyd und Alkylnaphthol sowie Formaldehyd und Bisphenol A. Als Alkoxylierungsreagenzien können beispielsweise Ethylenoxid, Propylenoxid, Poly-THF sowie hoehere Homologe verwendet werden.

Als Flammschutzmittel können im Allgemeinen die aus dem Stand der Technik bekannten Flammschutzmittel verwendet werden. Geeignete Flammschutzmittel sind beispielsweise bromierte Ether (z.B. Ixol^{®} B251), bromierte Alkohole wie Dibromneopentylakohol, Tribromneopentylalkohol und PHT-4-Diol sowie chlorierte Phosphate wie z.B. Tris-(2-chlorethyl)phosphat, Tris-(2-chlorisopropyl)phosphat (TCPP), Tris(1,3-dichlorisopropyl)phosphat, Tris-(2,3-dibrompropyl)phosphat und Tetrakis-(2-chlorethyl)-ethylendiphosphat. Außer den bereits genannten halogensubstituierten Phosphaten können auch anorganische Flammschutzmittel, wie roter Phosphor, roten Phosphor enthaltende Zubereitungen, Aluminiumoxidhydrat, Antimontrioxid, Ammoniumpolyphosphat und Calciumsulfat oder Cyanursäurederivate, wie z.B. Melamin oder Mischungen aus mindestens zwei Flammschutzmitteln, wie z.B. Ammoniumpolyphosphaten und Melamin sowie gegebenenfalls Stärke zum Flammfestmachen der erfindungsgemäß hergestellten PUR- bzw. PUR-/PIR-Hartschaumstoffe verwendet werden. Als weitere flüssige halogenfreie Flammschutzmittel können Diethyl-ethanphosphonat (DEEP), Triethylphosphat (TEP), Dimethylpropylphosphonat (DMPP), Diphenylkresylphosphat (DPK) und andere verwendet werden. Die Flammschutzmittel werden im Rahmen der vorliegenden Erfindung bevorzugt in einer Menge von 0 bis 30 Gew.-%, besonders bevorzugt von 2 bis 25 Gew.-%, insbesondere von 2,5 bis 3,5 Gew.-%, bezogen auf das Gesamtgewicht der Komponenten (b) bis (e) verwendet.

Nähere Angaben über die oben genannten und weitere Ausgangsstoffe sind der Fachliteratur, beispielsweise dem Kunststoffhandbuch, Band VII, Polyurethane, Carl Hanser Verlag München, Wien, 1., 2. und 3. Auflage 1966, 1983 und 1993, zu entnehmen.

Zur Herstellung der Polyurethan-Hartschaumstoffe werden die Polyisocyanate (b) und die Komponenten (a) und ggf. (f) in solchen Mengen zur Umsetzung gebracht, dass die Isocyanat-Kennzahl des Schaumes 90 bis 600, bevorzugt 150 bis 500, besonders bevorzugt 180 bis 450 beträgt.

Die Polyurethan-Hartschaumstoffe können diskontinuierlich oder kontinuierlich mit Hilfe bekannter Verfahren hergestellt werden. Dem Fachmann bekannt sind u.a. die Blockschaumherstellung (kontinuierlich und diskontinuierlich), die Verwendung in Einkomponentensystemen (diskontinuierlich) und im Isolierformschaum (diskontinuierlich). Die hier beschriebene Erfindung bezieht sich auf alle Verfahren, vorzugsweise jedoch auf das kontinuierliche Doppelbandverfahren, wobei als Deckschichten flexible und/oder starre Materialien verwendet werden können.

Die erfindungsgemässen Polyurethanhartschaumstoffe weisen bevorzugt eine Geschlossenzelligkeit grösser 90 %, besonders bevorzugt größer 95% auf.

Bevorzugt weisen die erfindungsgemäßen PUR-, bzw. PUR-/PIR-Schäume eine Dichte von 28 g/m³ bis 300 g/m³, besonders bevorzugt von 30 g/m³ bis 50 g/m³ auf.

Der Einsatz der erfindungsgemässen Polyurethanhartschaumstoffen erfolgt insbesondere zur Wärmedämmung, beispielsweise von Kühlgeräten, Behältern oder Gebäuden, z.B. in Form von gedämmten Rohren, Sandwichelementen, Dämmplatten oder Kühlgeräten.

Als Polyurethane im Sinne der vorliegenden Patentanmeldung werden auch polymere Isocyanataddukte verstanden, die neben Urethangruppen noch weitere Gruppen enthalten, wie sie beispielsweise durch Reaktion der Isocyanatgruppe mit sich selbst entstehen, beispielsweise Isocyanuratgruppen, oder die durch Reaktion der Isocyanatgruppen mit anderen Gruppen als mit Hydroxylgruppen entstehen, wobei die genannten Gruppen meist gemeinsam mit den Urethangruppen im Polymer vorliegen.

Ein weiterer Gegenstand der vorliegenden Erfindung ist die Verwendung von Polyesterpolyolen, die nach dem vorstehend beschriebenen Verfahren hergestellt werden, zur Herstellung von Polyurethan. Polyurethan ist ein vielseitiger Werkstoff, der in vielen Bereichen Anwendung findet. Auf Grund der großen Vielfalt der verwendbaren Rohstoffe können Produkte mit den unterschiedlichsten Eigenschaften hergestellt werden, beispielsweise Hartschäume zur Dämmung, Blockweichschäume für Matratzen, Formweichschäume für Autositze und Sitzkissen, Akustikschäume zur Schalldämmung, thermoplastische Schäume, Schuhschäume oder mikrozelluläre Schäume, aber auch kompakte Giessysteme und thermoplastische Polyurethane.

Im Folgenden wird die Erfindung anhand von Beispielen verdeutlicht.

### Beispiele

Zusammenstellung der in den Beispielen verwendeten Rohstoffe

| | |
|---|---|
| Techn. Glutarsäure | der Fa. Lanxess; Molmasse ca. 134 Da |
| Terephthalsäure | Interquisa |
| Phthalsäureanhydrid (PSA): | Technisches PSA der Fa. Lanxess |
| PEG 200 | Fa. BASF |
| PEG 180 | Fa. Ineos |
| Ethylenglykol (EG): | EG der Fa. Ineos |
| Zinn-II-Chlorid-dihydrat | Fa. Aldrich |
| Titan tetrabutylat | Fa. Aldrich |
| | |
| Verwendete Geräte: | |
| Viskosimeter: | MCR 51 der Fa. Anton Paar |
| Verwendete Analysenmethoden: | |
| Hydroxylzahl: | nach Houben Weyl, Methoden der Organischen Chemie, Band XIV/2 Makromolekulare Stoffe, S.17, Georg Thieme Verlag; Stuttgart 1963. |
| Säurezahl: | nach Houben Weyl, Methoden der Organischen Chemie, Band XIV/2 Makromolekulare Stoffe, S.17 f., Georg Thieme Verlag; Stuttgart 1963 |

### A) Herstellung der Polyesterpolyole

### Beispiel 1 (erfindungsgemäß):

In einem 4-Liter 4-Halskolben, ausgestattet mit Heizpilz, mechanischem Rührwerk, Innenthermometer, 40 cm-Füllkörper-Kolonne, Kolonnenkopf, absteigendem Intensivkühler, sowie Membranvakuumpumpe wurden 2280 g (11,4 Mol) PEG 200 unter Stickstoffüberschleierung bei 100°C vorgelegt. Man rührte im Verlauf von ca. 5 Minuten 732 g (4,41 Mol) Terephthalsäure ein und gab 83 mg Zinn-dichlorid dihydrat dazu. Man erhitzte für 2 Stunden auf 230°C, wobei Wasser abdestillierte und die Trübung des Reaktionsgemisches verschwand. Man gab dann 314 g (2,34 Mol) techn. Glutarsäure hinzu und erhitzte für weitere 90 Minuten auf 230°C. Danach wurden weitere 83 mg Zinn-dichlorid dihydrat zugegeben und Vakuum angelegt, zuletzt 30 mbar. Unter diesen Bedingungen ließ man weitere 5,5 Stunden kondensieren. Man kühlte ab und bestimmte folgende Eigenschaften:
Analyse des Polyesters:

| | |
|---|---|
| Hydroxylzahl: | 160 mg KOH/g |
| Säurezahl: | 2,0 mg KOH/g |
| Viskosität: | 1620 mPas (25°C), 310 mPas (50°C), 110 mPas (75°C) |

**Tabelle 1: Zusammensetzung und Eigenschaften erfindungsgemäßer und nicht erfindungsgemäßer Polyesterpolyole**

| Beispiel: | | 1 | 2 | 3(V) | 4(V) | 5(V) | 6(V) | 7(V) | 8 | 9(V) |
|---|---|---|---|---|---|---|---|---|---|---|
| Terephthalsäure | [g] | 732 | 999 | 1052 | 1204 | 1112 | 1052 | 887 | 2465 | |
| PEG 200 | [g] | 2280 | | 2176 | 1341 | 1499 | 1302 | 967 | 5263 | 2191 |
| PEG 180 | [g] | | 2041 | | | | | | | |
| Techn. Glutarsäure | [g] | 314 | 160 | | 325 | 333 | 505 | | 919 | 104 |
| Ethylenglykol | [g] | | | | 471 | 387 | 505 | 644 | 552 | |
| PSA | [g] | | | | | | | 791 | | 834 |
| Zinn-dichlorid-dihydrat | [mg] | 160 | 160 | 160 | | | | | | 64 |
| Titantetrabutylat | [mg] | | | | 235 | 235 | 235 | 235 | 610 | |
| | | | | | | | | | | |
| Hydroxylzahl | [mg KOH/g] | 160 | 159 | 159,7 | 160 | 160 | 160 | 155,5 | 162,7 | 159,9 |
| Säurezahl | [mg KOH/g] | 2,0 | 1,9 | 0,2 | 0,2 | 0,2 | 0,3 | 0,4 | 1,5 | 0,5 |
| Viskosität, 25°C | [mPas] | 1620 | 3510 | 2750 | fest | fest | fest | fest | 3030 | 1960 |
| | | | | | | | | | | |
| Anteil Terephthalsäure bzgl. aller Komponenten | [Gew.-%] | 22,0 | 31,2 | 32,6 | 35,9 | 33,4 | 31,3 | 27,0 | 28,2 | 0 |
| Anteil Ethergruppen aus Oligoethylenglykol | [mol/kg Ester] | 11,6 | 10,4 | 11,4 | 7,0 | 7,8 | 6,8 | 5,1 | 9,8 | 11,5 |
| Anteil Ethylenglykol | [Gew.-%] | 0 | 0 | 0 | 14,1 | 11,6 | 15,0 | 19,6 | 6,3 | 0 |
| Anteil PSA | [Gew.-%] | 0 | 0 | 0 | 0 | 0 | 0 | 24,0 | 0 | 26,6 |

| | | | | | | | | | | |
|---|---|---|---|---|---|---|---|---|---|---|
| V = Vergleichsbeispiel | | | | | | | | | | |

Beispiel 3(V) ist nicht erfindungsgemäß, weil zur Herstellung keine Komponente (C) (hier in den Beispielen: techn. Glutarsäure) verwendet wird. Beispiel 4(V) ist nicht erfindungsgemäß, weil der Anteil der Ethergruppen aus Oligoethylenglykolen unterhalb von 9 mol/kg Ester liegt und weil der Anteil an Komponenten, die nicht (A), (B) oder (C) sind, oberhalb von 10 Gew.-% liegt, im konkreten Fall werden 14,1 Gew.-% Ethylenglykol eingesetzt. Analoges gilt für die Beispiele 5(V), 6(V) und 7(V). Weiterhin zeigt Tabelle 1, dass die nicht erfindungsgemäßen Polyesterpolyole 4(V), 5(V), 6(V) und 7(V) bei Raumtemperatur nachteiligerweise im festen Zustand vorliegen, während erfindungsgemäße Polyesterpolyole 1, 2, 3 und 8 vorteilhafterweise flüssig sind. 9(V) genügt zwar diesem Kriterium, enthält jedoch keine Terephthalsäure, was sich im Übrigen als Nachteil im Brandverhalten erweist.

### Rohstoffe für PUR-/PIR-Hartschäume:

### a.) Polyester aus Bspl. 1, 2, 3, 8, 9(V)

Schäumzusatzmittel, bestehend aus b.) - d.):
b.) Vernetzer der Fa. Evonik
c.) Tegostab, Stabilisator der Fa. Evonik
d.) DMCHA, N,N-Dimethylcyclohexylamin der Fa. Rheinchemie
e.) TCPP, Tris(1-chloro-2-propyl)-phosphat der Fa. Lanxess
f.) n-Pentan, Fa. Kraemer & Martin
g.) Wasser, entmineralisiert
h.) Aktivator: Desmorapid VP.PU 1792, Fa. Bayer MaterialScience
i.) Desmodur VP.PU 44V40L, Polyisocyanat der Fa. Bayer MaterialScience

**Tabelle 2: Zusammensetzung und Eigenschaften erfindungsgemäßer und nicht erfindungsgemäßer Polyesterpolyol basierter PUR-/PIR-Schäume**

| Beispiel | | 10 | 11 | 12 | 13 | 14(V) | 15 | 16(V) |
|---|---|---|---|---|---|---|---|---|
| Polyol aus Bsp. 2 | [g] | 90,0 | | 90,0 | | | | |
| Polyol aus Bsp. 1 | [g] | | 90,0 | | 90,0 | | | |
| Polyol aus Bsp. 3(V) | [g] | | | | | 90,0 | | |
| Polyol aus Bsp. 8 | [g] | | | | | | 91,0 | |
| Polyol aus Bsp. 9(V) | [g] | | | | | | | 96,0 |
| Schäumzusatzmittel | [g] | 2,4 | 2,4 | 12,3 | 12,3 | 12,3 | 2,4 | 12,3 |
| TCPP | [g] | 15,0 | 15,0 | 15,0 | 15,0 | 15,0 | 15,0 | 15,0 |
| Wasser | [g] | 1,1 | 1,1 | 1,1 | 1,1 | 1,1 | 1,2 | 1,1 |
| Desmorapid 1792 | [g] | 2,6 | 2,6 | 2,5 | 2,5 | 2,5 | 2,6 | 2,5 |
| n-Pentan | [g] | 17,0 | 17,0 | 17,0 | 17,0 | 17,0 | 17,0 | 18,0 |
| Desmodur 44V40 L | [g] | 200 | 200 | 200 | 200 | 200 | 200 | 200 |
| Index | | 354 | 352 | 239 | 239 | 239 | 340 | 232 |
| Eigenschaften: | | | | | | | | |
| gef. Kernrohdichte | [kg/m³] | 34,1 | 33,7 | 34,0 | 34,1 | 34,7 | 33,3 | 33,3 |
| Abbindezeit | [s] | 43 | 40 | 28 | 27 | 24 | 44 | 27 |
| Klebfreizeit | [s] | 90 | 68 | 55 | 40 | 35 | 90 | 40 |
| Haftung nach 24 Std. | [Note] | 1 | 2 | 1-2 | 1 | 1 | 2 | 1 |
| KBT Klasse | | B2 | B2 | B2 | B2 | B2 | B2 | B3 |
| Ø Flammenhöhe | [mm] | 115 | 105 | 120 | 123 | 120 | 115 | 154 |
| Dimensionstabilität: Lagerung 24h bei -22°C | [%, x-Richtung] | -0,1 | 0,1 | 0,1 | -0,3 | 0,0 | -0,1 | -0,1 |
| | [%, y-Richtung] | -0,1 | 0,0 | -0,2 | -0,1 | -0,2 | -0,1 | 0,0 |
| | [%, z-Richtung] | 0,0 | 0,0 | 0,0 | 0,1 | 0,1 | 0,0 | 0,0 |
| Dimensionstabilität: Lagerung 24h bei 80°C | [%, x-Richtung] | -0,1 | -0,1 | 0,1 | -0,3 | 0,3 | -0,7 | -0,6 |
| | [%, y-Richtung] | 0,0 | 0,4 | 0,4 | 0,3 | -0,1 | -0,3 | -0,4 |
| | [%, z-Richtung] | -0,5 | -0,5 | 0,0 | -0,4 | -0,1 | -0,6 | -0,3 |

Index bezeichnet das molare Verhältnis aller Isocyanatgruppen zu allen zerewittinof-aktiven Wasserstoffatomen.

Im Labormaßstab werden alle Rohstoffe der Hartschaumrezeptur mit Ausnahme der Polyisocyanatkomponente in einem Pappbecher eingewogen, auf 23°C temperiert, mittels eines Pendraulik-Labormischers (z.B. Type LM-34 der Fa. Pendraulik) vermischt und verflüchtigtes Treibmittel (Pentan) ggf. ergänzt. Anschließend wurde unter Rühren die Polyisocyanatkomponente (ebenfalls auf 23°C temperiert) zur Polyolmischung gegeben, diese intensiv vermischt und das Reaktionsgemisch in mit Papier ausgekleidete Holzformen gegossen. Während des Aufschäumvorganges wurden Abbindezeit und Klebfreizeit ermittelt. Nach 24 Stunden wurden aus dem Schaumrohling würfelförmige Prüfkörper der Kantenlänge 9 cm ausgeschnitten.

Man bestimmte folgende Eigenschaften:

| | |
|---|---|
| Dimensionsstabilität: | Wird bestimmt, indem die Dimensionsänderung von würfelförmigen Prüfkörpern nach jeweils 24-stündiger Lagerung bei -22°C und +80°C ermittelt wird. Erfindungsgemäße Schäume weisen für jede Raumrichtung relative Längenänderungen von höchstens 1% (absolut) auf. |
| Kernrohdichte: | Wird aus dem Volumen und dem Gewicht eines ausgeschnittenen würfelförmigen Prüfkörpers ermittelt. |
| KBT: | Kleinbrennertest nach DIN 4102-1. Erfindungsgemäße Hartschäume erreichen die Brandschutzklasse B2. |
| Haftung: | Wird bestimmt, indem die beschäumten Papiereinleger von Hand langsam vom Schaum abgezogen werden. Die Beurteilung der Haftung erfolgt im Bereich von 1 (sehr gut) bis 6 (ungenügend), wobei die Beurteilung 1 bedeutet, dass das Papier sich nicht vom Schaum abziehen lässt und zerreißt, während bei 6 keinerlei Haftung von Papier und Schaum vorliegt. |
| Abbindezeit: | Wird ermittelt, indem man ein Holzstäbchen in die reagierende Polymerschmelze eintaucht und wieder heraushebt. Charakterisiert den Zeitpunkt, ab dem sich die Polymerschmelze verhärtet. |
| Klebfreizeit: | Charakterisiert die Beschaffenheit der Oberfläche des Schaums. Sie wird bestimmt, indem man den nicht mehr aufsteigenden Schaum mittels eines Holzstäbchens tupfend berührt. Der Zeitpunkt, ab dem kein Ankleben mehr erfolgt wird als Klebfreizeit bezeichnet. |

Tabelle 2 zeigt, dass alle erfindungsgemäßen Schäume die Brandschutzklasse B2 erreichen, während Schaum 16(V) hier versagt, obwohl mit der gleichen Menge an Flammschutzmittel TCPP ausgerüstet.

## Patentansprüche

1. Polyesterpolyol mit einer Konzentration an Ethergruppen im Bereich zwischen 9.0 mol/kg Polyesterpolyol und 16 mol/kg Polyesterpolyol, das hergestellt wird aus einer Mischung umfassend
(A) Terephthalsäure, (A)
(B) Oligoethylenglykol der Formel H-(OCH₂CH₂)ₙ-OH mit einer zahlenmittleren Anzahl Oxyethylengruppen n im Bereich zwischen 3.0 und 9.0, und
(C) wenigstens einer aliphatischen Dicarbonsäure ausgewählt aus der Gruppe bestehend aus Bernsteinsäure, Glutarsäure, Adipinsäure, Sebacinsäure, Korksäure, Azelainsäure, Decandicarbonsäure, Dodecandicarbonsäure und omega-Hydroxycapronsäure.

2. Polyesterpolyol nach Anspruch 1, **dadurch gekennzeichnet, dass** die Komponente (A) in einer Menge von 10 bis 40 Gew.-% bezogen auf die Gesamtmenge der Mischung vorliegt.

3. Polyesterpolyol nach Anspruch 1, **dadurch gekennzeichnet, dass** die Komponente (B) in einer Menge von 90 bis 60 Gew.-% bezogen auf die Gesamtmenge der Mischung vorliegt.

4. Polyesterpolyol nach Anspruch 1, **dadurch gekennzeichnet, dass** die Komponente (C) in einer Menge von 2 bis 20 Gew.-% bezogen auf die Gesamtmenge der Mischung vorliegt.

5. Polyesterpolyol nach einem oder mehreren der Ansprüche 1 bis 4, **dadurch gekennzeichnet, dass** das Polyesterpolyol eine Hydroxylzahl im Bereich zwischen 100 mg KOH/g und 400 mg KOH/g aufweist.

6. Polyesterpolyol nach einem oder mehreren der Ansprüche 1 bis 5, **dadurch gekennzeichnet, dass** das Polyesterpolyol eine Viskosität gemessen nach DIN 53019 im Bereich zwischen 800 mPas und 4500 mPas bei 25 °C aufweist.

7. Polyesterpolyol nach einem oder mehreren der Ansprüche 1 bis 6, **dadurch gekennzeichnet, dass** das Oligoethylenglykol (B) eine zahlenmittlere Anzahl Oxyethylengruppen n im Bereich zwischen 3.1 und 9 aufweist.

8. Polyesterpolyol nach einem oder mehreren der Ansprüche 1 bis 7, **dadurch gekennzeichnet, dass** das Polyesterpolyol einen Schmelzpunkt im Bereich zwischen -40 °C und 25 °C aufweist.

9. Verfahren zur Herstellung von Polyesterpolyolen nach einem oder mehreren der Ansprüche 1 bis 8, **dadurch gekennzeichnet, dass** die Komponenten (A), (B) und (C) in Gegenwart eines Katalysators ausgewählt aus der Gruppe bestehend aus Zinn(II)-Salzen und Titantetraalkoxylaten bei einer Temperatur im Bereich zwischen 160 °C und 240 °C und einem Druck im Bereich zwischen 1 und 1013 mbar für eine Dauer im Bereich zwischen 7 und 100 Stunden umgesetzt werden.

10. Verwendungen eines Polyesterpolyols nach einem oder mehreren der Ansprüche 1 bis 8 zur Herstellung eines PUR-, bzw. PUR/PIR-Schaumstoffes.

11. Verfahren zur Herstellung eines PUR-, bzw. PUR/PIR-Schaumstoffes umfassend die Schritte
a) Umsatz wenigstens eines Polyesterpolyols nach einem oder mehreren der Ansprüche 1 bis 8 mit
b) wenigstens einer polyisocyanathaltigen Komponente,
c) wenigstens einem Treibmittel,
d) wenigstens einem oder mehreren Katalysatoren,
e) gegebenenfalls wenigstens einem Flammschutzmittel und/oder weiteren Hilfs- und Zusatzstoffen
f) gegebenenfalls wenigstens einer Verbindung mit mindestens zwei gegenüber Isocyanat reaktiven Gruppen.

12. PUR-, bzw. PUR/PIR-Schaumstoff erhältlich nach dem Verfahren nach Anspruch 11.

13. Verwendung eines PUR-, bzw. PUR/PIR-Schaumstoffes erhältlich nach dem Verfahren nach Anspruch 11 zur Herstellung von gedämmten Rohren, Sandwichelementen, Dämmplatten oder Kühlgeräten.

## Claims

1. Polyester polyol having a concentration of ether groups in the range between 9.0 mol/kg polyester polyol and 16 mol/kg polyester polyol, which is produced from a mixture comprising
(A) terephthalic acid,
(B) oligoethylene glycol of the formula H-(OCH₂CH₂)ₙ-OH with a number-average number of oxyethylene groups n in the range between 3.0 and 9.0, and
(C) at least one aliphatic dicarboxylic acid selected from the group consisting of succinic acid, glutaric acid, adipic acid, sebacic acid, suberic acid, azelaic acid, decane dicarboxylic acid, dodecane dicarboxylic acid and omega-hydroxycaproic acid.

2. Polyester polyol according to claim 1, **characterised in that** component (A) is present in an amount from 10 to 40 wt.%, relative to the total amount of the mixture.

3. Polyester polyol according to claim 1, **characterised in that** component (B) is present in an amount from 90 to 60 wt.%, relative to the total amount of the mixture.

4. Polyester polyol according to claim 1, **characterised in that** component (C) is present in an amount from 2 to 20 wt.%, relative to the total amount of the mixture.

5. Polyester polyol according to one or more of claims 1 to 4, **characterised in that** the polyester polyol has a hydroxyl value in the range between 100 mg KOH/g and 400 mg KOH/g.

6. Polyester polyol according to one or more of claims 1 to 5, **characterised in that** the polyester polyol has a viscosity measured in accordance with DIN 53019 in the range between 800 mPas and 4500 mPas at 25°C.

7. Polyester polyol according to one or more of claims 1 to 6, **characterised in that** the oligoethylene glycol (B) has a number-average number of oxyethylene groups n in the range between 3.1 and 9.

8. Polyester polyol according to one or more of claims 1 to 7, **characterised in that** the polyester polyol has a melting point in the range between -40°C and 25°C.

9. Process for producing polyester polyols according to one or more of claims 1 to 8, **characterised in that** components (A), (B) and (C) are reacted in the presence of a catalyst selected from the group consisting of tin(II) salts and titanium tetraalkoxylates at a temperature in the range between 160°C and 240°C and under a pressure in the range between 1 and 1013 mbar for a time in the range between 7 and 100 hours.

10. Uses of a polyester polyol according to one or more of claims 1 to 8 to produce a PUR or PUR/PIR foam.

11. Process for producing a PUR or PUR/PIR foam comprising the following steps:
a) reaction of at least one polyester polyol according to one or more of claims 1 to 8 with
b) at least one polyisocyanate-containing component,
c) at least one blowing agent,
d) at least one or more catalysts,
e) optionally at least one flame retardant and/or further auxiliary substances and additives,
f) optionally at least one compound having at least two isocyanate-reactive groups.

12. PUR or PUR/PIR foam obtainable by the process according to claim 11.

13. Use of a PUR or PUR/PIR foam obtainable by the process according to claim 11 to produce insulated pipes, sandwich elements, insulating sheets or refrigerators.

## Revendications

1. Polyesterpolyol présentant une concentration en groupes éther dans la plage entre 9,0 moles/kg de polyesterpolyol et 16 moles/kg de polyesterpolyol, qui est préparé à partir d'un mélange comprenant
(A) de l'acide téréphtalique (A)
(B) de l' oligoéthylèneglycol de formule H-(OCH₂CH₂)ₙ-OH présentant un nombre numérique moyen de groupes oxyéthylène n dans la plage entre 3,0 et 9,0, et
(C) au moins un acide dicarboxylique aliphatique choisi dans le groupe constitué par l'acide succinique, l'acide glutarique, l'acide adipique, l'acide sébacique, l'acide subérique, l'acide azélaïque, l'acide décanedicarboxyique, l'acide dodécanedicarboxylique et l'acide oméga-hydroxycaproïque.

2. Polyesterpolyol selon la revendication 1, **caractérisé en ce que** le composant (A) se trouve en une quantité de 10 à 40% en poids par rapport à la masse totale du mélange.

3. Polyesterpolyol selon la revendication 1, **caractérisé en ce que** le composant (B) se trouve en une quantité de 90 à 60% en poids par rapport à la masse totale du mélange.

4. Polyesterpolyol selon la revendication 1, **caractérisé en ce que** le composant (C) se trouve en une quantité de 2 à 20% en poids par rapport à la masse totale du mélange.

5. Polyesterpolyol selon l'une ou plusieurs des revendications 1 à 4, **caractérisé en ce que** le polyesterpolyol présente un indice hydroxyle dans la plage entre 100 mg de KOH/g et 400 mg de KOH/g.

6. Polyesterpolyol selon l'une ou plusieurs des revendications 1 à 5, **caractérisé en ce que** le polyesterpolyol présente une viscosité, mesurée selon la norme DIN 53019, dans la plage entre 800 mPa.s et 4500 mPa.s à 25°C.

7. Polyesterpolyol selon l'une ou plusieurs des revendications 1 à 6, **caractérisé en ce que** l'oligoéthylèneglycol (B) présente un nombre numérique moyen de groupes oxyéthylène n dans la plage entre 3,1 et 9.

8. Polyesterpolyol selon l'une ou plusieurs des revendications 1 à 7, **caractérisé en ce que** le polyesterpolyol présente un point de fusion dans la plage entre -40°C et 25°C.

9. Procédé pour la préparation de polyesterpolyols selon l'une ou plusieurs des revendications 1 à 8, **caractérisé en ce que** les composants (A), (B) et (C) sont transformés en présence d'un catalyseur choisi dans le groupe constitué par les sels d'étain (II) et les tétraalcoxylates de titane à une température dans la plage entre 160°C et 240°C et à une pression dans la plage entre 1 et 1013 mbars pendant une durée dans la plage entre 7 et 100 heures.

10. Utilisations d'un polyesterpolyol selon l'une ou plusieurs des revendications 1 à 8 pour la production d'une mousse de PUR ou de PUR/PIR.

11. Procédé pour la production d'une mousse de PUR ou de PUR/PIR, comprenant les étapes :
a) transformation d'au moins un polyesterpolyol selon l'une ou plusieurs des revendications 1 à 8 avec
b) au moins un composant contenant du polyisocyanate,
c) au moins un agent gonflant,
d) au moins un ou plusieurs catalyseurs,
e) le cas échéant au moins un agent ignifuge et/ou d'autres adjuvants ou additifs
f) le cas échéant au moins un composé présentant au moins deux groupes réactifs par rapport à isocyanate.

12. Mousse de PUR ou de PUR/PIR pouvant être obtenue selon le procédé selon la revendication 11.

13. Utilisation d'une mousse de PUR ou de PUR/PIR pouvant être obtenue selon le procédé selon la revendication 11 pour la fabrication de tubes isolés, d'éléments sandwich, de plaques d'isolation ou d'appareils réfrigérateurs.
